# EUROPEAN PATENT SPECIFICATION

(11) **EP 3 681 789 B1**
(45) Date of publication and mention of the grant of the patent: **27.07.2022**
(21) Application number: 18856717.6
(22) Date of filing: 14.09.2018
(51) Int. Cl.: B62H 5/02, B60R 25/00, E05B 47/06, B60R 25/02, E05B 47/00, E05B 81/06, E05B 81/18, E05B 81/38, E05B 81/66, B62H 5/04

(54) **AN AUTOMATED HANDLE BAR LOCK FOR VEHICLES**
AUTOMATISCHES LENKSTANGENSCHLOSS FÜR FAHRZEUGE
VERROU DE BARRE DE POIGNÉE AUTOMATISÉ POUR VÉHICULES

(30) Priority: 14.09.2017 IN 201711032627
(43) Date of publication of application: 22.07.2020
(73) Proprietor: Minda Corporation Limited, Noida, Uttar Pradesh 201301 (IN)
(72) Inventor: GOSWAMI, Deepak, Noida Uttar Pradesh 201301 (IN); PURI, Vikram, Noida Uttar Pradesh 201301 (IN)
(74) Representative: Fioravanti, Corrado
(86) International application number: PCT/IB2018/057055
(87) International publication number: WO 2019/053648

(56) References cited:
- WO-A2-2005/081822
- CN-A- 103 359 055
- CN-Y- 2 698 926
- JP-A- S6 170 251
- JP-A- S60 220 242
- JP-B2- 3 688 494

## Description

### TECHNICAL FIELD

The present disclosure generally relates to the field of automobiles. Particularly, but not exclusively, the present disclosure relates to the construction and mechanism of a handle bar lock for vehicles. Further, embodiments of the present disclosure disclose an automated handle bar lock that is configured to lock/unlock the handle bar by means of a button when an authentic electronic key is brought in the vicinity.

### BACKGROUND OF THE PRESENT DISCLOSURE

The information in this section merely provides background information related to the present disclosure and may not constitute prior art(s).

Generally, vehicles such as, but not limited to, two-wheelers such as bikes, scooters and the like are provided with locks for locking the handle bar of the vehicle. Such locks generally comprise a locking means disposed in a casing and an external key to lock/unlock the handle bar of the vehicle. Such locks are widely used in the automobile industry and are commonly known as handle bar locks. However, one major drawback of such locks is that the user has to manually insert the key in the locking means every time he wants to perform the action of locking/unlocking of the handle bar of the vehicle. In the modern era of keyless operation of various functions in vehicles, using a mechanical key to manually lock/unlock the vehicle is a major drawback for manufacturers/users. Another drawback of manually operated handle bar locks is that the manual operation of locking/unlocking may not be swift as the locking means has a number of mating parts. Also, improper operation by the user may cause rough and sluggish locking/unlocking of the handle bar which eventually results in inconvenience to the users.

For example document WO 2005/081822 A2 discloses a handle bar lock as in the preamble of claim 1. Documents CN 103 359 055 A, JP S60 220242 A and JP S61 70251 A disclose locking assemblies in vehicles using planetary gears.

With the ongoing efforts, a number of arrangements have been proposed to provide a motorised handle bar lock in two-wheelers. However, a major disadvantage of such motorised locks is that they are not economical. Another disadvantage of these locks is the large size due to the number of gears required to drive a locking means in the lock, thereby resulting in limited application.

In other words, the researchers are constantly working to develop a technically advanced handle bar lock for vehicles which eliminates the problem of manual operation of locking/unlocking by inserting a key. More specifically, an automated handle bar lock that is economical and has a compact size so as to meet the space constraint in vehicles.

### SUMMARY

One or more drawbacks of conventional handle bar locks as described in the prior art are overcome and additional advantages are provided through an automated handle bar lock for vehicles as claimed in the present disclosure. Additional features and advantages are realized through the technicalities of the present disclosure. Other embodiments and aspects of the disclosure are described in detail herein and are considered to be a part of the claimed disclosure.

In one non-limiting embodiment of the present disclosure, there is provided an automated handle bar lock for vehicles. The automated handle bar lock comprises a housing and a bottom plate defining an encapsulation therebetween. There is provided a locking means for selectively locking/unlocking a handle bar of the vehicle. The handle bar lock further comprises a actuating means coupled with a drive mechanism. The drive mechanism comprises a ring gear and a sun gear meshed with the ring gear through a plurality of planet gears. The ring gear comprises a projection extending towards the bottom plate. The projection is offset from a centre of the ring gear and is rotatable about a central axis of the ring gear. The said projection is provided with a cavity to accommodate a magnet for position feedback sensor. The drive mechanism is operatively configured with the locking means by a slide plate. The slide plate comprises a slot for receiving the projection such that the locking means translates laterally upon rotary movement of the ring gear.

In an embodiment, the plurality of planet gears is supported between a carrier and the housing.

In an embodiment, the plurality of planet gears is pivoted in corresponding pivot points formed in the housing.

In an embodiment, the ring gear is co-axial with the sun gear and defines a rotary movement about the central axis upon rotation of the sun gear.

In one embodiment, a retaining plate is disposed between the ring gear and the slide plate.

In an embodiment, the retaining plate comprises an arcuate slot for constraining a rotary movement of the projection.

In one embodiment, the projection passes through the arcuate slot to be received in slot of the slide plate.

In an embodiment, the actuating means is a motor operable by an electronic control unit (ECU).

In an embodiment, the projection is accommodated with a magnet.

In an embodiment, the ECU is configured with one or more sensors. The ECU is adapted to stop the motor upon completion of the locking/unlocking of the locking means, by determining a position of the projection and the corresponding position of the locking means.

The foregoing summary is illustrative only and is not intended to be in any way limiting. In addition to the illustrative aspects, embodiments, and features described above, further aspects, embodiments, and features will become apparent with reference to the drawings and the following detailed description.

### BRIEF DESCRIPTION OF THE ACCOMPANYING DRAWINGS

The novel features and characteristics of the disclosure are set forth in the appended description. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an isometric view of the automated handle bar lock in accordance with the present disclosure.
**Figure 2** illustrates an exploded view of the automated handle bar lock of Figure 1, according to an embodiment of the present disclosure.
**Figure 3** depicts an isometric view of the drive mechanism of the automated handle bar lock of Figure 1, according to an embodiment of the present disclosure.
**Figures 4a-4b** illustrate perspective views of the ring gear, plurality of planet gears and sun gear of the drive mechanism of Figure 3, according to an embodiment of the present disclosure.
**Figure 5** illustrates the perspective view of the carrier for supporting the plurality of planet gears of Figures 3 and 4, according to an embodiment of the present disclosure.
**Figure 6** illustrates a sectional view of the automated handle bar lock of Figure 1, according to an embodiment of the present disclosure.
**Figure 7** shows a bottom view of the automated handle bar lock, whereby the locking means is in locked condition, according to an embodiment of the present disclosure.
**Figure 8** shows a bottom view of the automated handle bar lock, whereby the locking means is in unlocked condition, according to an embodiment of the present disclosure.
**Figure 9** illustrates the perspective view of the housing according to an embodiment of the present disclosure.

The figures depict embodiments of the disclosure for purposes of illustration only. One skilled in the art will readily recognize from the following description that alternative embodiments of the assemblies and methods illustrated herein may be employed without departing from the principles of the disclosure described herein.

### DETAILED DESCRIPTION

While the invention is subject to various modifications and alternative forms, specific embodiment thereof has been shown by way of example in the figures and will be described below. It should be understood, however that it is not intended to limit the invention to the particular forms disclosed, but on the contrary, the invention is to cover all modifications and alternatives falling within the scope of the invention as defined by the appended claims.

Before describing in detail, the various embodiments of the present disclosure it may be observed that the novelty and inventive step that are in accordance with an automated handle bar lock for vehicles. It is to be noted that a person skilled in the art can be motivated from the present disclosure and can perform various modifications. However, such modifications should be construed within the scope of the invention. Accordingly, the drawings are showing only those specific details that are pertinent to understanding the embodiments of the present disclosure so as not to obscure the disclosure with details that will be readily apparent to those of ordinary skill in the art having benefit of the description herein.

The terms "comprises", "comprising", or any other variations thereof, are intended to cover a non-exclusive inclusion, such that an assembly, setup, system, device that comprises a list of components does not include only those components but may include other components not expressly listed or inherent to such system or device or setup. In other words, one or more elements in the system or apparatus or device proceeded by "comprises a" does not, without more constraints, preclude the existence of other elements or additional elements in the assembly or system or apparatus. The following paragraphs explain present disclosure. The invention in respect of the same may be deduced accordingly.

Accordingly, it is an aim of the present disclosure to provide an automated handle bar lock for vehicles which reduces manual operation.

Another aim of the present disclosure is to provide an automated handle bar lock that is economical and compact in size so as to meet the space limitation in vehicles.

Yet another aim of the present disclosure is to provide an automated handle bar lock that has smooth locking/unlocking operation.

Accordingly, the present disclosure provides an automated handle bar lock for vehicles. The automated handle bar lock comprises a housing and a bottom plate defining an encapsulation therebetween. There is provided a locking means for selectively locking/unlocking a handle bar of the vehicle. The handle bar lock further comprises a actuating means coupled with a drive mechanism. The drive mechanism comprises a ring gear and a sun gear meshed with the ring gear through a plurality of planet gears. The ring gear comprises a projection extending towards the bottom plate. The projection is offset from a centre of the ring gear and is rotatable about a central axis of the ring gear. The said projection is provided with a cavity to accommodate a magnet for position feedback sensor. The drive mechanism is operatively configured with the locking means by a slide plate. The slide plate comprises a slot for receiving the projection such that the locking means translates laterally upon rotary movement of the ring gear. The plurality of planet gears is supported between a carrier and the housing. The plurality of planet gears is pivoted in corresponding pivot points formed in the housing. The ring gear is co-axial with the sun gear and defines a rotary movement about the central axis upon rotation of the sun gear. A retaining plate is disposed between the ring gear and the slide plate. The retaining plate comprises an arcuate slot for constraining a rotary movement of the projection. The projection passes through the arcuate slot to be received in slot of the slide plate. The actuating means is a motor operable by an electronic control unit (ECU). The ECU is configured with one or more sensors. The ECU is adapted to stop the motor upon completion of the locking/unlocking of the locking means, by determining a position of the projection and the corresponding position of the locking means.

Accordingly, the present disclosure relates to the construction and mechanism of a handle bar lock for vehicles. Further, embodiments of the present disclosure disclose an automated handle bar lock for keyless operation. It is understood by a person skilled in the art that communication between an actuator and a receiver may be facilitated by means of wireless communication so as to authenticate a correct user before activation of the automated handle bar lock. In an exemplary embodiment of the present disclosure, there may be provided an RFID antenna and receiver on the lock and/or the key. Radio waves transmitted by the antenna are received by the receiver when the key is in the vicinity of the handle bar lock. Thereby, a correct user is detected, and the automated handle bar lock may be operated by the correct user.

Reference will now be made to an automated handle bar lock for vehicles which is explained with the help of figures. The figures are for the purpose of illustration only and should not be construed as limitations on the assembly and mechanism of the present disclosure. Wherever possible, referral numerals will be used to refer to the same or like parts.

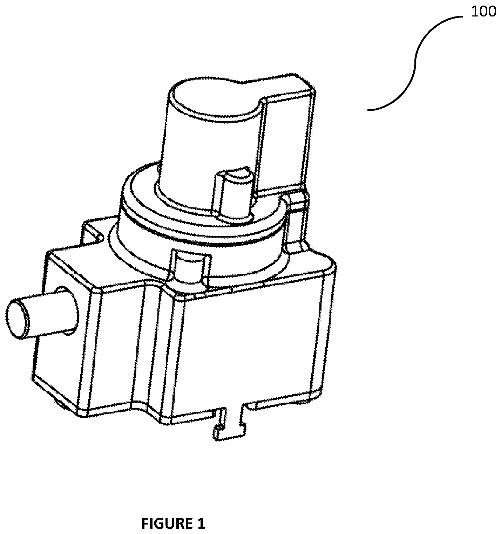

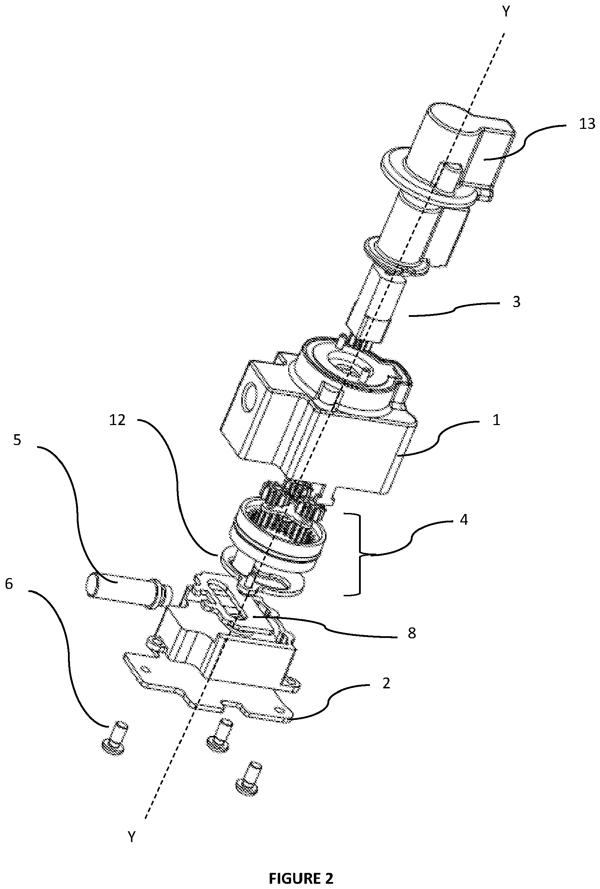

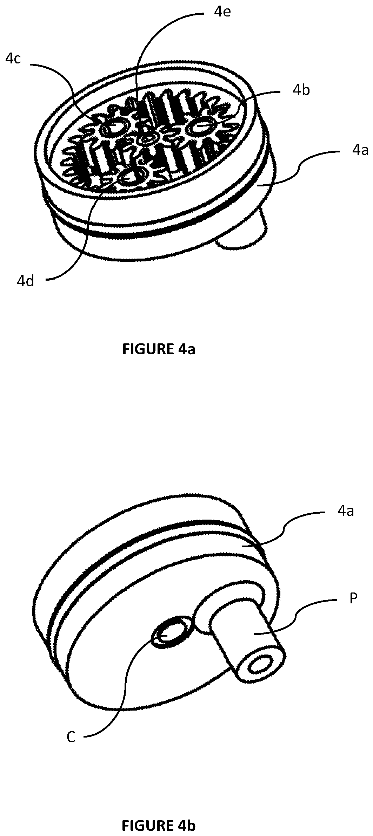

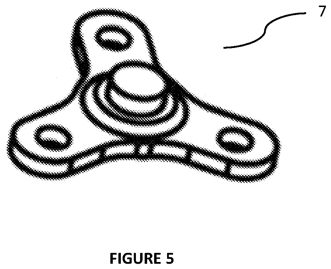

Figures 1 to 8 illustrate an automated handle bar lock (100) for vehicles according to the present disclosure. The automated handle bar lock (100) comprises a housing (1) and a bottom plate (2) forming an encapsulation therebetween for accommodating various components of the said lock. Disposed in the interior of the encapsulation is a locking means (5). The locking means (5) may be operatively engageable with a locking member for selectively locking/unlocking a handle bar of the vehicle (not shown). The automated handle bar lock (100) further comprises an actuating means (3) coupled with a drive mechanism (4) for operating the locking means (5). In a non-limiting embodiment, the actuating means (3) may be a motor operable by an electronic control unit (ECU). The actuating means (3) can therefore be actuated electronically by means of a switch-button (not shown) on a switch panel of the vehicle. In an embodiment, the bottom plate (2) is assembled with the housing (1) by means of fastening means such as rivets (6). A cover (13) may be mounted externally to secure the actuating means (3) from the external environment.

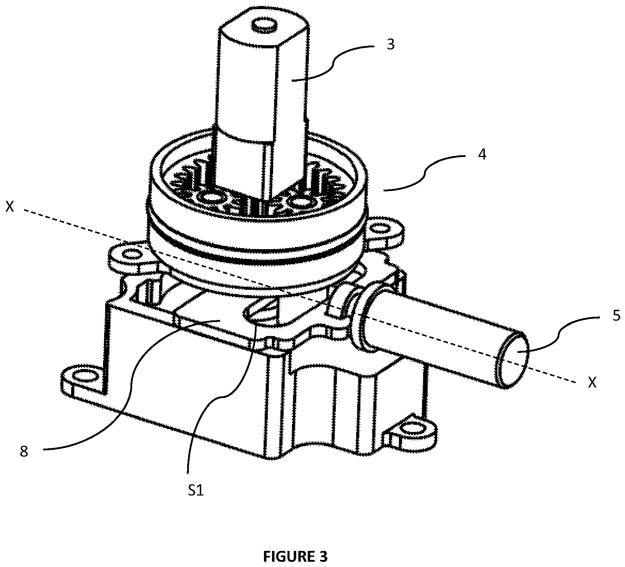

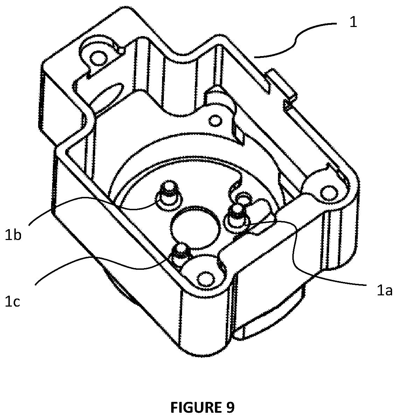

As shown in Figures 3 to 5 and Figure 9, the drive mechanism (4) is a planetary gear arrangement comprising a ring gear (4a), a plurality of planet gears (4b, 4c, 4d) and sun gear (4e). The sun gear (4e) is disposed coaxially with the ring gear (4a) and is in meshed connection with the ring gear (4a) through a plurality of planet gears (4b, 4c, 4d). In an embodiment, the plurality of planet gears (4b, 4c, 4d) are pivoted in corresponding pivot points (1a, 1b, 1c) formed internally in the housing (1). The projections (1a, 1b, 1c) extend vertically downwards towards the bottom plate (2). In an embodiment, a carrier (7) is disposed below the plurality of planet gears (4b, 4c, 4d) such that the plurality of planet gears (4b, 4c, 4d) is supported between the carrier (7) and the housing (1).

In the mounted condition, the sun gear (4e) is coupled to a drive shaft of the actuating means (3) such that torque from the actuating means (3) is transmitted to the sun gear (4e) upon activation of the actuating means (3). Torque is transmitted from the sun gear (4e) to the ring gear (4a) through the plurality of planet gears (4b, 4c, 4d). The ring gear (4a) is co-axial with the sun gear (4e) and therefore defines a rotary movement about central axis YY upon rotation of the sun gear (4e).

The ring gear (4a) comprises a projection (P) being formed normally along axis YY. The projection (P) has a generally cylindrical configuration and extends towards the bottom plate (13). The projection (P) is offset from a centre (C) of the ring gear (4a) such that the projection (P) defines a rotary movement about the central axis YY upon rotation of the sun gear (4e). Disposed below the ring gear (4a) is a retaining plate (12). The retaining plate comprises a slot (S2) having a generally arcuate shape. In the mounted condition, the retaining plate (12) may be fastened to the housing (1) by a fastening means. In this condition, the arcuate slot (S2) is located below the projection (P) such that the projection (P) can pass therethrough. The shape and dimensional configuration of the arcuate slot (S2) corresponds with the shape and path defined by a rotary movement of the projection (P) such that the arcuate slot (S2) constrains the rotary movement of the projection (P). In one embodiment, the said projection (P) is provided with a cavity (4b) to accommodate a magnet for position feedback sensor. The projection (P) is accommodated with a magnet (9).

The drive mechanism (4) is operatively configured with the locking means (5) by a slide plate (8). The slide plate has a generally rectangular configuration and comprises a slot (S1) for receiving the projection (P). The locking means, which may be a cylindrical rod, extends laterally from an edge of the slide plate (8), along axis XX. In one embodiment, the slot (S1) is extends laterally in a direction perpendicular to axis XX and has a dimensional configuration that corresponds to the movement of the locking means (5) along axis XX. During actuation, the locking means (5) translates laterally along axis XX upon rotary movement of the ring gear (4a) to selectively lock/unlock the handle bar of the vehicle. In a non-limiting embodiment, the handle bar may be in the locked condition when the locking means (5) is in an extended position away from the slide plate (8). Accordingly, the handle bar may be in the unlocked condition when the locking means (5) is in a retracted position towards the slide plate (8).

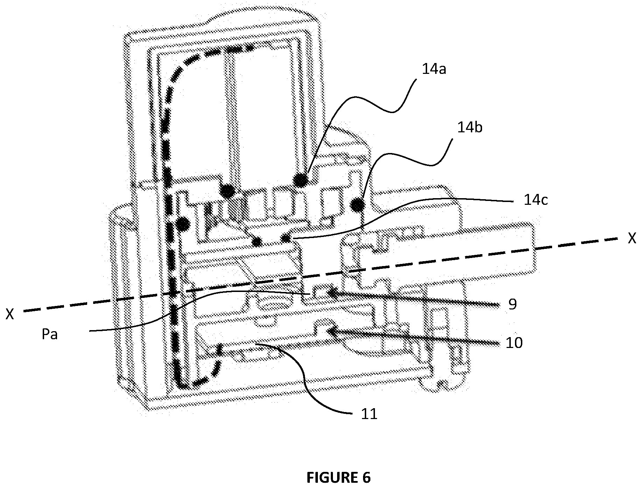

In an embodiment, the ECU may be configured with one or more sensors. The ECU is adapted to regulate the actuating (3) by stopping it upon completion of the locking/unlocking of the locking means (5), by determining a position of the projection (P) and the corresponding position of the locking means (5). For this purpose, in the present embodiment, as shown in Figure 6, a magnet (9) is housed inside a cavity of the projection (P). The magnet (9) along with a hall sensor (10) provided on the ECU (11) determines the position of projection (P) in the ring gear (4a) and the corresponding position of the locking means (5). Therefore, the ECU (11) stops the motor when the required locking/unlocking motion of locking means (5) has been performed. Figure 6 also illustrates the internal wiring connection of ECU to the motor. The wiring connection, being completely routed inside the housing is protected from any external tampering. O rings (14a, 14b, 14c) seal the internal mechanism at critical locations against external moisture and dirt.

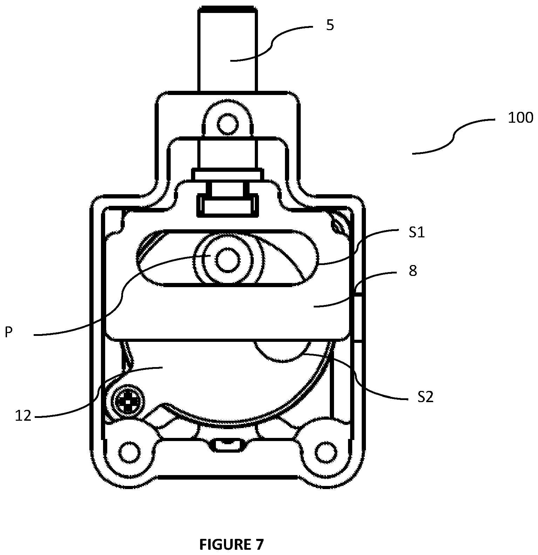

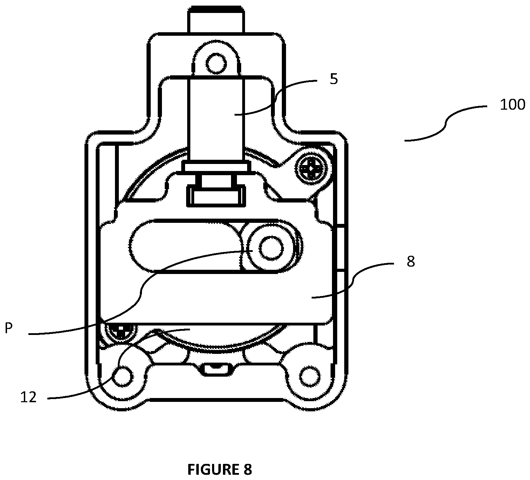

During operation of the said automated handle bar lock (100), referring to Figures 7 and 8, when the user actuates the switch-button on the vehicle to unlock the handle bar of the vehicle from the locked condition, the ECU (11) searches for an authentic key (not shown) in the vicinity of the handle bar lock (100). Upon successful authentication, the ECU (11) actuates the actuating means (3) to rotate. The drive shaft of the actuating means (3) drives the sun gear (4e) which in turn causes the planet gears (4b, 4c, 4d) to rotate about their respective axis on the carrier (7). The arrangement allows the planet gears (4b, 4c, 4d) to freely rotate on their own axis and restricts other motions. This rotational movement is transmitted to the ring gear (4a). Rotation of motor (3) in one direction drives the ring gear (4a) in same direction. The rotational movement of the projection (P) causes the slide plate (8) to translate inwards towards the housing (1) such that the locking means (5) recedes towards the housing (1), resulting in the desired unlocking of the handle bar of the vehicle. During locking of the said handle bar lock (100), the ECU detects the position of the projection (P) and the corresponding position of the locking means (5). Accordingly, the actuating means (3) is activated in the opposite direction which results in the locking means (5) translating away from the housing (1) to engage with a locking member, thereby resulting in locking of the handle bar lock (100).

**List of reference numerals:**

| | |
|---|---|
| 100 | Automated Handle Bar Lock |
| 1 | Housing |
| 1a, 1b, 1c | Plurality of Projections of the Housing |
| 2 | Bottom Plate |
| 3 | Actuating Means |
| 4 | Drive Mechanism |
| 4a | Ring Gear |
| 4b, 4c, 4d | Plurality of Planet Gears |
| 4e | Sun Gear |
| 5 | Locking Means |
| 6 | Rivets |
| 7 | Carrier |
| 8 | Slide Plate |
| 9 | Magnet |
| 10 | Hall Sensor |
| 11 | ECU |
| 12 | Retaining Plate |
| 13 | Cover |
| 14, 14b, 14c | O Rings |
| P | Projection |
| S1 | Slot of the Slide Plate |
| S2 | Arcuate slot of the Retaining Plate |

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "having" should be interpreted as "having at least," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. An automated handle bar lock (100) for vehicles, comprising;
a housing (1) and a bottom plate (2) defining an encapsulation therebetween;
a locking means (5) for selectively locking/unlocking a handle bar of the vehicle;
an actuating means (3) coupled with a drive mechanism (4);
the drive mechanism (4) comprising:
a ring gear (4a); and
a sun gear (4e) meshed with the plurality of planet gears (4b, 4c, 4d) which further meshed with a ring gear (4a) **characterized in that**
the ring gear (4a) comprises a projection (P) extending towards the bottom plate (13), the projection (P) being offset from a centre (C) of the ring gear (4a) and being rotatable about a central axis of the ring gear (4a); and **in that**
the said projection (P) is provided with a cavity (4b) to accommodate a magnet for position feedback sensor; and
wherein the drive mechanism (4) is operatively configured with the locking means (5) by a slide plate (8); the slide plate (8) comprising a slot (S1) for receiving the projection (P) such that the locking means (5) translates laterally along axis XX upon rotary movement of the ring gear (4a).

2. The automated handle bar lock (100) as claimed in claim 1, wherein the plurality of planet gears (4b, 4c, 4d) is supported between a carrier (7) and the housing (1).

3. The automated handle bar lock (100) as claimed in claims 1 and 2, wherein the plurality of planet gears (4b, 4c, 4d) are pivoted in corresponding pivot points (1a, 1b, 1c) formed in the housing (1).

4. The automated handle bar lock (100) as claimed in claim 1, wherein the sun gear (4e) is rotatable by a drive shaft of the actuating means (3).

5. The automated handle bar lock (100) as claimed in claim 1, wherein the ring gear (4a) is co-axial with the sun gear (4e); and defines a rotary movement about the central axis upon rotation of the sun gear (4e).

6. The automated handle bar lock (100) as claimed in claim 1, wherein a retaining plate (12) is disposed between the ring gear (4a) and the slide plate (8); said retaining plate (12) being mounted with the body.

7. The automated handle bar lock (100) as claimed in claims 1 and 6, wherein the retaining plate (12) comprises an arcuate slot (S2) for constraining a rotary movement of the projection (P).

8. The automated handle bar lock (100) as claimed in claims 1, 6 and 7, wherein the projection (P) passes through the arcuate slot (S2) to be received in slot (S1) of the slide plate (8).

9. The automated handle bar lock (100) as claimed in claim 1, wherein the actuating means (3) is a motor operable by an electronic control unit (ECU).

10. The automated handle bar lock (100) as claimed in claim 1, wherein the projection (P) is accommodated with a magnet (9).

11. The automated handle bar lock (100) as claimed in claim 1, wherein the ECU is configured with one or more sensors; the ECU being adapted to stop the actuating means (3) upon completion of the locking/unlocking of the locking means (5), by determining a position of the projection (P) and the corresponding position of the locking means (5).

## Patentansprüche

1. Automatisches Lenkstangenschloss (100) für Fahrzeuge, umfassend:
ein Gehäuse (1) und eine Bodenplatte (2), die eine Kapselung dazwischen definiert;
ein Verriegelungsmittel (5) zum selektiven Verriegeln/Entriegeln einer Lenkstange des Fahrzeugs;
ein Betätigungsmittel (3), das mit einem Antriebsmechanismus (4)gekoppelt ist;
wobei der Antriebsmechanismus (4) umfasst:
ein Hohlrad (4a); und
ein Sonnenrad (4e), das mit der Vielzahl von Planetenrädern (4b, 4c, 4d) in Eingriff steht, die ferner mit einem Hohlrad (4a) in Eingriff stehen, **dadurch gekennzeichnet, dass**
das Hohlrad (4a) einen Vorsprung (P) umfasst, der sich in Richtung der Bodenplatte (13) erstreckt, wobei der Vorsprung (P) von einem Mittelpunkt (C) des Hohlrads (4a) versetzt und um eine Mittelachse des Hohlrads (4a) drehbar ist; und dadurch, dass
der Vorsprung (P) mit einem Hohlraum (4b) versehen ist, um einen Magneten für den Positionsrückkopplungssensor aufzunehmen; und
wobei der Antriebsmechanismus (4) mit dem Verriegelungsmittel (5) durch eine Gleitplatte (8) wirkverbunden ist; wobei die Gleitplatte (8) einen Schlitz (S1) zum Aufnehmen des Vorsprungs (P) umfasst, sodass sich das Verriegelungsmittel (5) seitlich entlang der Achse XX bei einer Drehbewegung des Hohlrads (4a) verschiebt.

2. Automatisches Lenkstangenschloss (100) nach Anspruch 1, wobei die Vielzahl von Planetenrädern (4b, 4c, 4d) zwischen einem Träger (7) und dem Gehäuse (1) gelagert ist.

3. Automatisches Lenkstangenschloss (100) nach Anspruch 1 und 2, wobei die Vielzahl von Planetenrädern (4b, 4c, 4d) in entsprechenden Schwenkpunkten (1a, 1b, 1c), die in dem Gehäuse (1) ausgebildet sind, geschwenkt werden.

4. Automatisches Lenkstangenschloss (100) nach Anspruch 1, wobei das Sonnenrad (4e) von einer Antriebswelle des Betätigungsmittels (3) drehbar ist.

5. Automatisches Lenkstangenschloss (100) nach Anspruch 1, wobei das Hohlrad (4a) koaxial mit dem Sonnenrad (4e) ist; und eine Drehbewegung um die Mittelachse bei Drehung des Sonnenrads (4e) definiert.

6. Automatisches Lenkstangenschloss (100) nach Anspruch 1, wobei eine Halteplatte (12) zwischen dem Hohlrad (4a) und der Gleitplatte (8) angeordnet ist; wobei die Halteplatte (12) mit dem Körper montiert ist.

7. Automatisches Lenkstangenschloss (100) nach Anspruch 1 und 6, wobei die Halteplatte (12) einen bogenförmigen Schlitz (S2) zum Einschränken einer Drehbewegung des Vorsprungs (P) umfasst.

8. Automatisches Lenkstangenschloss (100) nach Anspruch 1, 6 und 7, wobei der Vorsprung (P) durch den bogenförmigen Schlitz (S2) verläuft, der in den Schlitz (S1) der Gleitplatte (8) aufgenommen werden soll.

9. Automatisches Lenkstangenschloss (100) nach Anspruch 1, wobei das Betätigungsmittel (3) ein Motor ist, der von einer elektronischen Steuereinheit (ECU) betreibbar ist.

10. Automatisches Lenkstangenschloss (100) nach Anspruch 1, wobei der Vorsprung (P) mit einem Magneten (9) aufgenommen ist.

11. Automatisches Lenkstangenschloss (100) nach Anspruch 1, wobei die ECU mit einem oder mehreren Sensoren konfiguriert ist; wobei die ECU ausgelegt ist, um das Betätigungsmittel (3) nach Abschluss des Verriegelns/Entriegelns des Verriegelungsmittels (5) zu stoppen, indem eine Position des Vorsprungs (P) und die entsprechende Position des Verriegelungsmittels (5) bestimmt werden.

## Revendications

1. Verrouillage automatique de guidon (100) pour véhicules, comprenant ;
un logement (1) et une plaque inférieure (2) définissant une encapsulation entre eux ;
un moyen de verrouillage (5) pour verrouiller/déverrouiller sélectivement un guidon du véhicule ;
un moyen d'actionnement (3) couplé à un mécanisme d'entraînement (4) ;
le mécanisme d'entraînement (4) comprenant :
une couronne dentée (4a) ; et
un engrenage solaire (4e) engrené avec la pluralité d'engrenages satellites (4b, 4c, 4d) qui sont en outre engrenés avec une couronne dentée (4a) **caractérisé en ce que**
la couronne dentée (4a) comprend une saillie (P) s'étendant en direction de la plaque inférieure (13), la saillie (P) étant décalée d'un centre (C) de la couronne dentée (4a) et pouvant effectuer une rotation autour d'un axe central de la couronne dentée (4a) ; et **en ce que**
ladite saillie (P) est pourvue d'une cavité (4b) pour loger un aimant pour un capteur de rétroaction de position ; et
dans lequel le mécanisme d'entraînement (4) est fonctionnellement configuré avec le moyen de verrouillage (5) par une plaque de coulissement (8) ; la plaque de coulissement (8) comprenant une fente (S1) pour recevoir la saillie (P) de telle sorte que le moyen de verrouillage (5) se déplace en translation latéralement le long d'un axe XX lors d'un mouvement rotatif de la couronne dentée (4a).

2. Verrouillage automatique de guidon (100) tel que revendiqué dans la revendication 1, dans lequel la pluralité d'engrenages satellites (4b, 4c, 4d) est supportée entre un support (7) et le logement (1).

3. Verrouillage automatique de guidon (100) tel que revendiqué dans les revendications 1 et 2, dans lequel la pluralité d'engrenages satellites (4b, 4c, 4d) sont pivotés dans des points de pivot correspondants (1a, 1b, 1c) formés dans le logement (1).

4. Verrouillage automatique de guidon (100) tel que revendiqué dans la revendication 1, dans lequel l'engrenage solaire (4e) peut effectuer une rotation par un arbre d'entraînement du moyen d'actionnement (3).

5. Verrouillage automatique de guidon (100) tel que revendiqué dans la revendication 1, dans lequel la couronne dentée (4a) est coaxiale par rapport à l'engrenage solaire (4e) ; et définit un mouvement rotatif autour de l'axe central lors d'une rotation de l'engrenage solaire (4e).

6. Verrouillage automatique de guidon (100) tel que revendiqué dans la revendication 1, dans lequel une plaque de retenue (12) est disposée entre la couronne dentée (4a) et la plaque de coulissement (8) ; ladite plaque de retenue (12) étant montée avec le corps.

7. Verrouillage automatique de guidon (100) tel que revendiqué dans les revendications 1 et 6, dans lequel la plaque de retenue (12) comprend une fente arquée (S2) pour contraindre un mouvement rotatif de la saillie (P).

8. Verrouillage automatique de guidon (100) tel que revendiqué dans les revendications 1, 6 et 7, dans lequel la saillie (P) passe à travers la fente arquée (S2) pour être reçue dans la fente (S1) de la plaque de coulissement (8).

9. Verrouillage automatique de guidon (100) tel que revendiqué dans la revendication 1, dans lequel le moyen d'actionnement (3) est un moteur pouvant fonctionner au moyen d'une unité de commande électronique (ECU).

10. Verrouillage automatique de guidon (100) tel que revendiqué dans la revendication 1, dans lequel la saillie (P) est reçue avec un aimant (9).

11. Verrouillage automatique de guidon (100) tel que revendiqué dans la revendication 1, dans lequel l'ECU est configurée avec un ou plusieurs capteurs ; l'ECU étant conçue pour arrêter le moyen d'actionnement (3) à l'achèvement du verrouillage/déverrouillage du moyen de verrouillage (5), en déterminant une position de la saillie (P) et la position correspondante du moyen de verrouillage (5).
